(19)

Europäisches
Patentamt
European
Patent Office
Office européen
des brevets

(11) **EP 4 194 822 B1**

(12) **EUROPEAN PATENT SPECIFICATION**

(45) Date of publication and mention
of the grant of the patent:
**16.04.2025 Bulletin 2025/16**

(21) Application number: **21212895.3**

(22) Date of filing: **07.12.2021**

(51) International Patent Classification (IPC):
**G01J 4/00** (2006.01)    **H04L 9/08** (2006.01)

(52) Cooperative Patent Classification (CPC):
**H04L 9/0852; G01J 4/04**

(54) **METHOD AND MODULE FOR POLARIZATION ANALYSIS**

VERFAHREN UND VORRICHTUNG ZUR POLARISATIONSANALYSE

PROCÉDÉ ET MODULE D'ANALYSE DE POLARISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023 Bulletin 2023/24**

(73) Proprietor: **Fraunhofer-Gesellschaft zur
Förderung
der angewandten Forschung e.V.
80686 München (DE)**

(72) Inventors:
• **Steinlechner, Fabian
07745 Jena (DE)**
• **Marques Muniz, André Luiz
07745 Jena (DE)**
• **Flügel-Paul, Thomas
07745 Jena (DE)**

(74) Representative: **Louis Pöhlau Lohrentz
Patentanwälte
Merianstrasse 26
90409 Nürnberg (DE)**

(56) References cited:
**US-A1- 2005 083 525**

• **KAI WANG ET AL: "Quantum metasurface for
multi-photon interference and state
reconstruction", ARXIV.ORG, CORNELL
UNIVERSITY LIBRARY, 201 OLIN LIBRARY
CORNELL UNIVERSITY ITHACA, NY 14853, 10
April 2018 (2018-04-10), XP081107863, DOI:
10.1126/SCIENCE.AAT8196**
• **PROVENZANO C ET AL: "PHOTOPOLARIMETER
BASED ON TWO GRATINGS RECORDED IN THIN
ORGANIC FILMS", APPLIED OPTICS, OPTICAL
SOCIETY OF AMERICA, WASHINGTON, DC, US,
vol. 45, no. 17, 10 June 2006 (2006-06-10), pages
3929 - 3934, XP001243946, ISSN: 0003-6935, DOI:
10.1364/AO.45.003929**

EP 4 194 822 B1

**Description**

The present invention provides a polarization analysis module, preferably for quantum key distribution (QKD) according to the preamble of claim 1 and a method for polarization analysis, preferably for quantum key distribution (QKD) according to the preamble of claim 10.

Quantum cryptography or quantum key distribution (QKD) are known to ensure a secured point-to-point communication. The security provided by quantum key distribution (QKD) protocols is harnessed to the laws of quantum physics and thus independent of all future advances of algorithm or computational power. The most used quantum key distribution (QKD) protocols are the prepare and measure BB84 protocol based on a single photon source or the E91 protocol based on an entangled photon source. The key generation is based in the most cases on the polarization of single photons or entangled photon pair.

To perform a polarization measurement passive and active systems are known. In passive systems an optical element, for example a beam splitter is used to split up the beam path and thus enable the measurement in two different bases by additional polarization elements, for example polarizer and detectors. The disadvantage of a passive system is the large number of optical components and the high losses in the system in order to measure in two mutually unbiased bases, as required by the most quantum key distribution (QKD) protocols.

In active systems the base in which to measure is determined by an active polarization influencing element, for example an electro optical modulator switching between the two bases to be measured followed by a polarization element, for example polarizer and detectors. The disadvantage of an active system is the higher loss of the polarization influencing element and the necessity to use additional elements in order to enable a random base choice, as required by the most quantum key distribution (QKD) protocols.

US 2005/083525 A1 discloses a polarization analysis module and method for polarization analysis.

It is an object of the present invention to provide an improved and low loss passive polarization analysis module and method thereof.

According to the present invention, a polarization analysis module is provided according to claim 1.

The inventive polarization analysis module, preferably for quantum communication, quantum cryptography, and/or quantum key distribution (QKD), comprises a first and a second diffraction element, a wave-plate, and at least four single photon detectors, in order to enable a polarization analysis of single photons in two mutually unbiased bases and two orthogonal states per base. According to the invention, the first and second diffraction elements are polarization-sensitive first and second dielectric metastructure gratings, and the wave-plate is arranged between the first and second dielectric metastructure grating, and at least two detectors are arranged in diffraction paths of the first diffraction element, and at least two detectors are arranged in diffraction paths of the second diffraction element.

The object is further achieved by a method for polarization analysis according to claim 10.

The inventive method for polarization analysis of single photons, preferably for quantum communication, quantum cryptography, and/or quantum key distribution (QKD), is realized in a first base and a second base and two orthogonal states per base, whereby the first and the second bases are two mutually unbiased bases, whereby a first single photon possesses a polarization in one of the two orthogonal states of the first base and a second single photon possesses a polarization in one of the two orthogonal states of the second base.

According to the invention, a first dielectric metastructure grating transmits or diffracts the first and/or second single photon randomly, and

in order to detect the polarization of the first photon with certainty in one of the two orthogonal states of the first base, the first single photon is diffracted on the first dielectric metastructure grating followed by a detection of the first single photon in a diffraction path of the first dielectric metastructure grating, and

in order to detect the polarization of the second photon with certainty in one of the two orthogonal states of the second base, the second single photon is transmitted through the first dielectric metastructure grating and through a wave-plate and is diffracted on a second dielectric metastructure grating followed by a detection of the second single photon in a diffraction path of the second dielectric metastructure grating.

An advantage of the inventive polarization analysis module and the inventive method for polarization analysis is the use of two polarization-sensitive dielectric metastructure gratings and the analysis by diffraction, leading to a low loss and high contrast polarization measurement of single photons.

Another advantage of the inventive polarization analyzer and the method is the random polarization-insensitive transmission or polarization-dependent diffraction in the first dielectric metastructure grating and the polarization dependent diffraction by the second dielectric metastructure grating. By the random transmission a random choice of the base in which to measure is realized as required by quantum key distribution (QKD) protocols. **In** addition, the first dielectric metastructure grating replaces multiple optical elements, as this one dielectric metastructure grating fulfills a polarization dependent diffraction and the function of a random choice of the base.

An advantage of the inventive module and method by the use of two dielectric metastructure gratings is, that gratings with small period can be used leading to a better resolution in other degrees of freedom, for example a possible wavelength dependent separation in addition to the polarization measurement.

With certainty means here, the detection of the polarization of the first single photon in one of the two orthogonal states of the first base by 100% when the first single photon is diffracted on the first dielectric metastructure grating, assuming a detection efficiency of the detector with 100%. **If** the first single photon is transmitted through the first dielectric metastructure grating, the polarization of the first photon is determined by the second dielectric metastructure grating in one of the two orthogonal states of the second base with uncertainty, that means with a random outcome of 50% in each diffraction path of the second dielectric metastructure grating.

This also applies for the second photon; With certainty means here, the detection of the polarization of the second single photon in one of the two orthogonal states of the second base by 100% when the second single photon is diffracted on the second dielectric metastructure grating, assuming a detection efficiency of the detector with 100%. If the second single photon is diffracted by the first dielectric metastructure grating, the polarization of the second photon is determined by the first dielectric metastructure grating in one of the two orthogonal states of the first base with uncertainty, that means with a random outcome of 50% in each diffraction path of the first dielectric metastructure grating.

Diffraction by the first and/or the second polarization-sensitive dielectric metastructure grating means here, an angle dependent polarization diffraction.

A polarization-dependent diffraction at the first polarization-sensitive dielectric metastructure grating can be described by the diffraction angle $\beta$ with

$$sin\beta = \begin{cases} sin\alpha \;\pm m\,\lambda/P & \text{with probability } 0.5 \times |\gamma|^2 \\ sin\alpha & \text{with probability } 0.5 \\ sin\alpha \;\mp m\,\lambda/P & \text{with probability } 0.5 \times (1 - |\gamma|^2) \end{cases}$$

whereby $\alpha$ denotes the angle of incidence; $\lambda$ denotes the wavelength; P denotes the period of the first metastructure grating; m denotes the used or selected diffraction order of the first metastructure grating. $\gamma$ corresponds to the projection of the single photon state of polarization to the first orthogonal state of the first mutually unbiased base of the metastructure grating.

A polarization-dependent diffraction at the second polarization-sensitive dielectric metastructure grating can be described by the diffraction angle $\beta$ with

$$sin\beta = \begin{cases} sin\alpha \;\pm m\,\lambda/P & \text{with probability } 1 \times |\gamma|^2 \\ sin\alpha \;\mp m\,\lambda/P & \text{with probability } 1 \times (1 - |\gamma|^2) \end{cases}$$

whereby $\alpha$ denotes the angle of incidence; $\lambda$ denotes the wavelength; P denotes the period of the first metastructure grating; $m$ denotes the used or selected diffraction order of the second metastructure grating. $\gamma$ corresponds to the projection of the single photon state of polarization to the first orthogonal state of the second mutually unbiased base of the metastructure grating.

In a preferred embodiment, the inventive polarization analysis module and/or the method for polarization analysis is used for polarization analysis for multiple first single photons and multiple second single photons, preferably one after the other, more preferably in random order. In a preferred embodiment, the first and/or second single photon is a single photon or a single photon from a polarization entangled photon pair, preferably a signal photon or an idler photon.

In a preferred embodiment, the first dielectric metastructure grating transmits the first and/or second single photon with 50% probability or diffracts the first and/or second single photon with 50% probability. In a preferred embodiment, the second dielectric metastructure grating diffracts the first and/or second single photon, preferably with 100%. In a preferred embodiment, the first dielectric metastructure grating is a polarization-insensitive beam splitting element, preferably a 50/50 beam splitter, and a polarization-sensitive diffraction element and the second dielectric metastructure grating is a polarization-sensitive diffraction element.

In a preferred embodiment, the first dielectric metastructure grating performs the measurement of the first single photon in the first mutually unbiased base. In a preferred embodiment, the wave-plate and the second dielectric metastructure grating perform the measurement of the second single photon in the second mutually unbiased base.

In a preferred embodiment, the first dielectric metastructure grating enables the measurement of the single photon in the two orthogonal states of the fist mutually unbiased base. In a preferred embodiment, the first orthogonal state of the first mutually unbiased base is resolved by the diffraction of the first single photon in the +1st diffraction order of the first dielectric metastructure grating. In a preferred embodiment, the second orthogonal state of the first mutually unbiased base is resolved by the diffraction of the first single photon in the -1st diffraction order of the first dielectric metastructure grating.

In a preferred embodiment, the second dielectric metastructure grating and the wave-plate enables the measurement of the single photon in the two orthogonal states of the second mutually unbiased base. In a preferred embodiment, the first orthogonal state of the second mutually unbiased base is resolved by the diffraction of the second single photon in the +1st diffraction order of the second dielectric metastructure grating. In a preferred embodiment, the second orthogonal state of the second mutually unbiased base is resolved by the diffraction of the second single photon in the -1st diffraction order of the second dielectric metastructure grating.

For a quantum key distribution protocol in most cases the source of the single photons and the receiver, or the two receivers of single photons have to agree on two mutually unbiased bases to generate a key. The measurement is performed in two orthogonal states per base at each receiver. As a non-exclusive example, the two mutually unbiased bases can be two out of the three H/V base, +/- base, and L/R base, with H denotes linear horizontal polarization, V denotes linear horizontal polarization, + denotes linear 45° polarization, - denotes linear 135° polarization, L denotes left-hand circular polarization, R denotes right-hand circular polarization. It is also possible to realize a quantum key distribution protocol with two others, preferably elliptically polarized mutually unbiased bases and their orthogonal states.

In a preferred embodiment, the first and/or second dielectric metastructure grating diffracts single photons in the first base, preferably circular polarization, in the $\pm$1st diffraction order. In a preferred embodiment, the second dielectric metastructure grating diffracts by the use of the wave-plate in front of the second dielectric metastructure grating single photons in the second base, preferably linear polarization, in the $\pm$1st diffraction order.

In a preferred embodiment, a polarization rotator is arranged in front of the first dielectric metastructure grating. The polarization rotator allows a rotation of the polarization states depending on its setting from any point to any point on the Poincaré-sphere. In a preferred embodiment, the polarization rotator in front of the first dielectric metastructure grating set the bases of the first dielectric metastructure grating. The advantage of this embodiment is the independent and flexible choice of the two mutually biased bases in the setup by the polarization rotator and the wave-plate. By these two elements all possible mutually unbiased bases on the Poincaré sphere can be detected by the module and the method.

In a preferred embodiment, the polarization rotator is a quarter-wave-plate, and/or a half-wave-plate, and/or a soleil Babinet compensator, or a combination of a first quarter wave-plate, a half wave-plate, and a second quarter-wave-plate.

In a preferred embodiment, the wave-plate and/or the polarization rotator introduce a unitary (coherence conserving) transformation of the polarization of the first and/or second single photon. This can be realized by birefringent elements and can be understood as a rotation of the polarization states on the Poincaré-sphere about a particular axis.

In a preferred embodiment, the wave-plate between the first and the second dielectric metastructure grating is a quarter wave-plate, preferably at 45° in order to diffract the second single photons in the H/V base.

In a preferred embodiment, the wave-plate between the first and the second dielectric metastructure grating is a quarter wave-plate, preferably at 0° in order to diffract the second single photons in the +/- base.

In a preferred embodiment, the wave-plate and/or the polarization rotation element acts as an element rotating the polarization. The rotation of the polarization is a unitary transformation of the polarization, that means only a transformation but not a measurement.

In a preferred embodiment, the wave-plate and the second dielectric metastructure grating are arranged in the transmission path, preferably 0th order diffraction path, of the first dielectric metastructure grating behind the first dielectric metastructure grating. 0th order diffraction path means here that the photon is transmitted without diffraction.

In a preferred embodiment, the at least two detectors are arranged in two selected diffraction paths of the first diffraction element, preferably two diffraction paths of orthogonal polarization.

In a preferred embodiment, the at least two detectors behind the first and/or second dielectric metastructure grating are arranged in the $\pm$1st order diffraction path of the first and/or second dielectric metastructure grating, and/or a higher order diffraction path.

In a preferred embodiment, the first and/or second dielectric metastructure grating split each diffraction path up by one or more additional degrees of freedom. In a preferred embodiment, the additional degree of freedom is the wavelength of the single photon, and/or orbital angular momentum.

In a preferred embodiment, in each additional degree of freedom diffraction path a detector is arranged, in order to detect the first and/or second single photon in a specific diffraction path and with a specific additional degree of freedom.

Embodiment with additional degree of freedom allows a polarization analyzation of the single photon and an analyzation in the additional degree of freedom of this single photon at the same time. This is realized by the polarization dependent diffraction on the first and/or second dielectric metastructure grating and an additional angle of diffraction introduced by the additional degree of freedom.

This leads for example to an additional division of the $\pm$1st order diffraction paths into several wavelength or orbital angular momentum dependent $\pm$1st order diffraction paths. An advantage of this embodiment is the analysis of different degrees of freedom in one setup and by one method at the same time. This could be used to increase the key generation rate by using a second degree of freedom and additional detectors to overcome the limit of the key generation rate by only one detector. The key generation rate with one detector is for example limited by the death time of the detector.

Dielectric metastructure grating means here a two-dimensional periodic metastructure of dielectric nano-structures. The two-dimensional lattice structure of the nano-structures can be rectangular, hexagonal, or quasiperiodic. The nano-structures can be dielectric cuboids, nanobeams, elliptical or rectangular air-holes, V-antennas, or any other laterally anisotropic structures.

In a preferred embodiment, the dielectric nano-structures are dimension- or orientation-varying nanoposts, orientation-varying nanobeams, double rectangular resonators with varying spacings and/or widths, and/or rectangular mesh.

In a preferred embodiment, the first and/or second dielectric metastructure grating comprises an orientation varying and/or a dimension varying metastructure.

For the dimension-varying metastructures, the sizes or shapes of the metastructures are spatial-dependent, and determine the local optical phase. The shape of the metastructures affects the resonance frequencies.

For the orientation varying metastructure, only the orientation of the metastructures is varied, whereby this is also known as Pancharatnam-Berry (PB) phase. With the Pancharatnam-Berry (PB) phase design, the local optical phase is completely controlled by the orientation of the metastructures with uniform size and shape.

In a preferred embodiment, the first and/or second dielectric metastructure grating comprises a planar Pancharatnam-Berry phase structure in order to diffract the photons in addition to the polarization on their orbital angular momentum.

In a preferred embodiment, the first and/or second dielectric metastructure grating has a size of at least 2 x 2 mm, preferably at least 5 x 5 mm, more preferably at least 10 x 10 mm.

In a preferred embodiment, the first and/or second dielectric metastructure grating has a period comprising more than 5 nano-structures.

In a preferred embodiment, the nano-structures have a size of less than the wavelength of the single photons.

In a preferred embodiment, the first and/or second single photon is detected in one of the diffraction paths of the first and/or second dielectric metastructure grating by a detector, preferably a single photon detector. In a preferred embodiment, the single photon detector is a germanium (Ge), or silicon (Si), or germanium on silicon (Ge on Si) single-photon avalanche diode (SPAD), or Indium gallium arsenide (InGaAs/Inp) single photon detector, or semiconductor-based single-photon avalanche diode (SPAD), or superconducting nanowire single-photon detector (SNSPD), or Silicon Avalanche Photodiodes (Si APD).

In a preferred embodiment, the inventive polarization analysis module is arranged in a quantum cryptography system, preferably a quantum key distribution system, comprising a single photon source and a receiver with one inventive polarization analysis module, whereby the receiver is connected with the single photon source via a quantum channel, and whereby a single photon is generated in the source, transmitted via the quantum channel to the receiver and measured in the at least one inventive polarization analysis module.

In a preferred embodiment, the inventive polarization analysis module is used in a quantum cryptography system for polarization analyses, preferably is used by the receiver.

In a preferred embodiment the single photon source generates single photons in a specific polarization, preferable randomly in one of the two mutually unbiased bases.

In a preferred embodiment, the inventive polarization analysis module is arranged in a quantum cryptography system, preferably a quantum key distribution system, comprising a entangled photon source and at least two receivers with one inventive polarization analysis module each, whereby each receiver is connected with the entangled photon source via a quantum channel, and whereby polarization entangled photon pair with a signal photon and an idler photon is generated in the source, and one photon of each pair is transmitted via the quantum channel to one receiver and measured in the at least one inventive polarization analysis module.

In a preferred embodiment, the receiver comprises a communication module in order to communicate the base of the detection of the single photon with the single photon source or the second receiver. The communication of the base has to be realized in order to generate a key between the single photon source and the one receiver, or between the two receivers.

The above and other aspects, features and advantages of the present invention will become more apparent from the following detailed description when taken in conjunction with the accompanying drawings.

Brief description of the drawings:

Fig. 1:    schematic diagram of a first embodiment of the inventive polarization analysis module;
Fig. 2:    the inventive polarization analysis module from Fig. 1 with a polarization rotator in front of the first dielectric metastructure grating;

Fig. 3:     schematic diagram of the inventive polarization analysis module in a prepare and measure quantum key distribution setup;

Fig. 4:     schematic diagram of the inventive polarization analysis module in an entangled photon quantum key distribution setup;

Fig. 5:     the first inventive polarization analysis module used for polarization and an additional degree of freedom analysis;

Fig. 6:     schematic example of a dielectric metastructure grating in top view;

Fig. 7:     dielectric metastructure grating from Fig. 6 in side view;

Fig. 8:     transmission probability for the +1st (-1st) order and the 0th order in the first dielectric metastructure grating for a single photon with left-hand circular (right-hand circular) polarization;

Fig. 9:     transmission probability for the +1st (-1st) order in the second dielectric metastructure grating for a single photon with left-hand circular (right-hand circular) polarization.

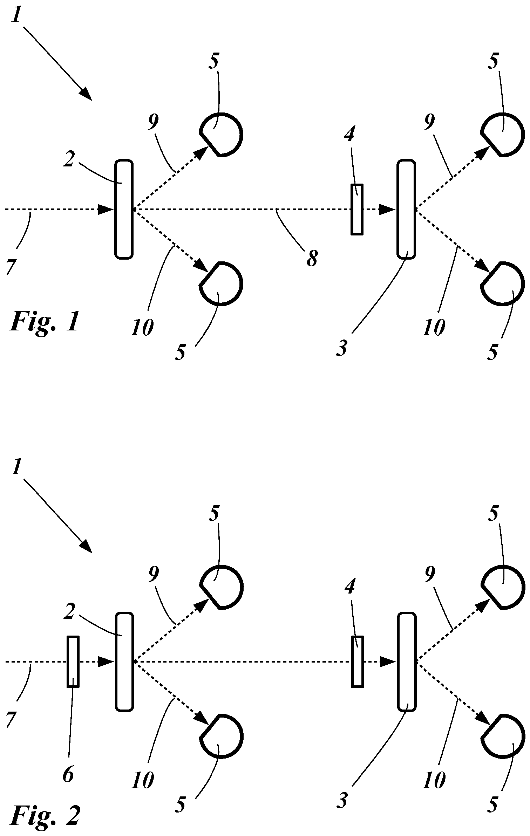

Fig. 1 shows a first embodiment of the inventive polarization analysis module 1. The polarization analysis module 1 comprises a first dielectric metastructure grating 2, a second dielectric metastructure grating 3, a wave-plate 4, and four detectors 5.

As shown in Fig. 1 the first dielectric metastructure grating 2 is arranged in a single photon path 7 of first and second single photons. The first dielectric metastructure grating 2 transmits or diffracts the first and/or second single photon randomly.

When the first and/or second single photon is diffracted by the first dielectric metastructure grating 2 the first and/or second single photon is sent on the +1st order diffraction path 10 or on the -1st order diffraction path 9 to one of the detectors 5 where the first and/or second single photon is detected. The first dielectric metastructure grating 2 is in the example of Fig. 1 designed to diffract circular polarized (left L or right R circular polarization) single photons with certainty into the +1st order diffraction path 10 or the -1st order diffraction path 9. Other polarizations from mutually unbiased bases are diffracted with uncertainty, that means with a probability of 50% in one of the diffraction paths 9 or 10 of the first dielectric metastructure grating 2. Thus, the first dielectric metastructure grating 2 acts as a beam splitting element or as a polarization analysis element for single photons in the L/R base, this means for single photons with left L or right R circular polarization with certainty.

When the first and/or second single photon is transmitted through the first dielectric metastructure grating 2, the first and/or second photon is sent on the 0th order diffraction path 8 to the wave-plate 4. The wave-plate 4 is in the example of Fig. 1 a quarter-wave-plate converting the polarization of the first and/or second single photon from circular polarization to linear polarization and vice versa. The second dielectric metastructure grating 3 is in the example of Fig. 1 also designed to diffract circular polarized (left L or right R circular polarization) single photons with certainty into the +1st order diffraction path 10 or the -1st order diffraction path 9. Together with the quarter-wave-plate 4 the second dielectric metastructure grating 3 acts as a polarization analysis element for single photons in the H/V base, this means for single photons with horizontal H or vertical V linear polarization with certainty. By a rotation of the quarter-wave-plate 4 the base to be measured can be changed to any other base, for example by a rotation of 45° to the +/- base. Due to the wave-plate 4 and the second dielectric metastructure grating 3 in the example of Fig. 1 linear polarized single photons are diffracted with certainty into the +1st order diffraction path 10 (for example horizontal linear polarization) or the -1st order diffraction path 9 (for example vertical linear polarization).

As a first non-exclusive example for the inventive polarization analysis module 1 and the inventive method in table 1 the detection probability of the whole setup from Fig. 1 is shown for single photons with different polarizations. Output 1 means here the probability to detect a single photon in the -1st order diffraction path 9 of the first dielectric metastructure grating 2. Output 2 means here the probability to detect a single photon in the +1st order diffraction path 10 of the first dielectric metastructure grating 2. Output 3 means here the probability to detect a single photon in the -1st order diffraction path 9 of the second dielectric metastructure grating 3. Output 4 means here the probability to detect a single photon in the +1st order diffraction path 10 of the second dielectric metastructure grating 3. In this example the first dielectric metastructure grating 2 is a polarization analysis element for single photons in the L/R base when measured in one of the diffraction paths of the first dielectric metastructure grating 2. The wave-plate 4 and the second dielectric metastructure grating 3 is a polarization analysis element for single photons in the H/V base when measured in one of the diffraction paths of the second dielectric metastructure grating 3.

Table 1:

| Input | Output 1 | Output 2 | Output 3 | Output 4 |
|-------|----------|----------|----------|----------|
| H     | 25%      | 25%      | 0%       | 50%      |
| V     | 25%      | 25%      | 50%      | 0%       |

(continued)

| Input | Output 1 | Output 2 | Output 3 | Output 4 |
|-------|----------|----------|----------|----------|
| R | 50% | 0% | 25% | 25% |
| L | 0% | 50% | 25% | 25% |
| + | 25% | 25% | 25% | 25% |
| - | 25% | 25% | 25% | 25% |

For a key generation protocol in the example of Table 1 the H/V and the R/L bases would be used as mutually unbiased measurement bases. The detection probability shows, that for a single photon with H- or V-Polarization, the first dielectric metastructure grating 2 acts as a 50/50 beam splitting element by an overall probability of 50% due to both $\pm 1^{st}$ order diffraction in the R/L base and a 50% probability of transmission (shown by the detection in the H/V output). In addition, it can be seen that the first dielectric metastructure grating 2 with detection in the output 1 and output 2 is an analysis in a mutually unbiased base to the H/V base because by the first dielectric metastructure grating 2 no information by a detection of a single photon in output 1 or output 2 can be received because of the same detection probability. When the single photon is detected in the second dielectric metastructure grating 3, meaning here in the H/V base, it can be seen, that the H photon is always detected in the output 4, or a single photon with vertical polarization is always detected in the output 3.

In addition, it can be seen from Table 1 that the first dielectric metastructure grating resolves in the R/L bases. In Table 1 the input of the + and - polarizations (linear polarization in 45 and 135 degree) is only shown for the sake of completeness. This base is not used in this example for a key generation protocol.

Fig. 2 shows the inventive polarizations analysis module 1 from Fig. 1 with an additional polarization rotation element 6 in front of the first dielectric metastructure grating 2. By the polarization rotation element 6 the base of the analysis for the first dielectric metastructure grating 2 can be set for example to an analysis of the +/- bases using a quarter-wave-plate while maintaining the H/V bases of the second dielectric metastructure grating 3.

As a second non-exclusive example for the inventive polarization analysis module 1 and the inventive method in table 2 the detection probability of the whole setup from Fig. 2 is shown for different input polarizations. The inputs and outputs in Table 2 denote the same as in Table 1. In Fig. 2 a polariton rotation element, here a quarter-wave-plate at 0° is located in front of the first dielectric metastructure grating 2, leading to a polarization analysis in the two mutually unbiased bases H/V and +/-.

Table 2:

| Input | Output 1 | Output 2 | Output 3 | Output 4 |
|-------|----------|----------|----------|----------|
| H | 25% | 25% | 0% | 50% |
| V | 25% | 25% | 50% | 0% |
| R | 25% | 25% | 25% | 25% |
| L | 25% | 25% | 25% | 25% |
| + | 50% | 0% | 25% | 25% |
| - | 0% | 50% | 25% | 25% |

The difference to Table 1 is in Table 2, that the polarization analysis takes place in the H/V and the +/- bases and for a key generation protocol these bases would be used.

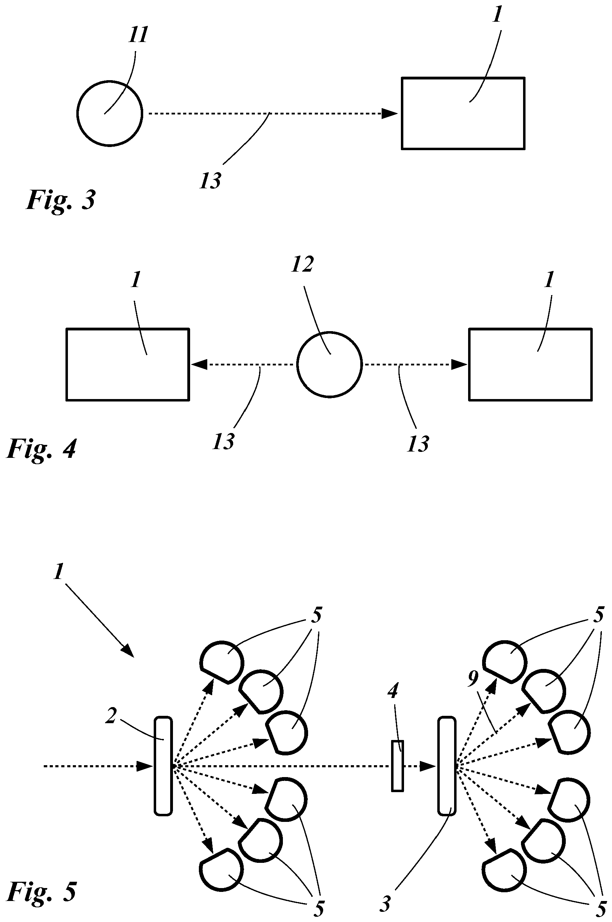

Fig. 3 shows the implementation of the inventive polarization analysis module 1 in a quantum key distribution (QKD) with a prepare and measure protocol like BB84. A single photon source 11 generates single photons one after the other. Each single photon is prepared at a polarization in one of the two orthogonal states of one of the mutually unbiased bases. The single photons are sequentially generated, prepared and sent via a quantum channel 13 to the inventive polarization analysis module 1. By the inventive polarization analysis module 1 a random base choice out of the two mutually unbiased bases and a polarization analysis is realized. Due to that a key is generated for example with the BB84 protocol.

Fig. 4 shows the implementation of the inventive polarization analysis module 1 in a quantum key distribution (QKD) with an entangled photon source 12. In the example of Fig. 4 polarization entangled photon pairs, comprising each a signal photon and an idler photon, are generated in the entangled photon source 12 one after the other. The signal photon of each pair is sent via a quantum channel 13 to a first inventive polarization analysis module 1 and the idler photon of each pair is sent via a quantum channel 13 to a second inventive polarization analysis module 1. By the inventive polarization analysis module 1 a random base choice out of the two mutually unbiased bases and a polarization analysis is realized on the signal and the idler photons. Due to that a key is generated for example with the E91 protocol.

Fig. 5 shows the inventive polarization analysis module 1 from Fig. 1 used for polarization analysis and the analysis of an additional degree of freedom. The difference to the example of Fig. 1 is, that in Fig. 5 the -1st order diffraction path 9 and the +1st order diffraction path 10 are split into several -1st order diffraction paths 9 and +1st order diffraction paths 10 by an additional degree of freedom, for example the wavelength of the single photons. In the example of Fig. 5 the first dielectric metastructure grating 2 acts as a beam splitting element or as a polarization and a second degree of freedom analysis element. The second dielectric metastructure grating 3 acts as a polarization and a second degree of freedom analysis element. In dependence of the second degree of freedom, additional detectors are arranged in the multiple ±1st order diffraction paths.

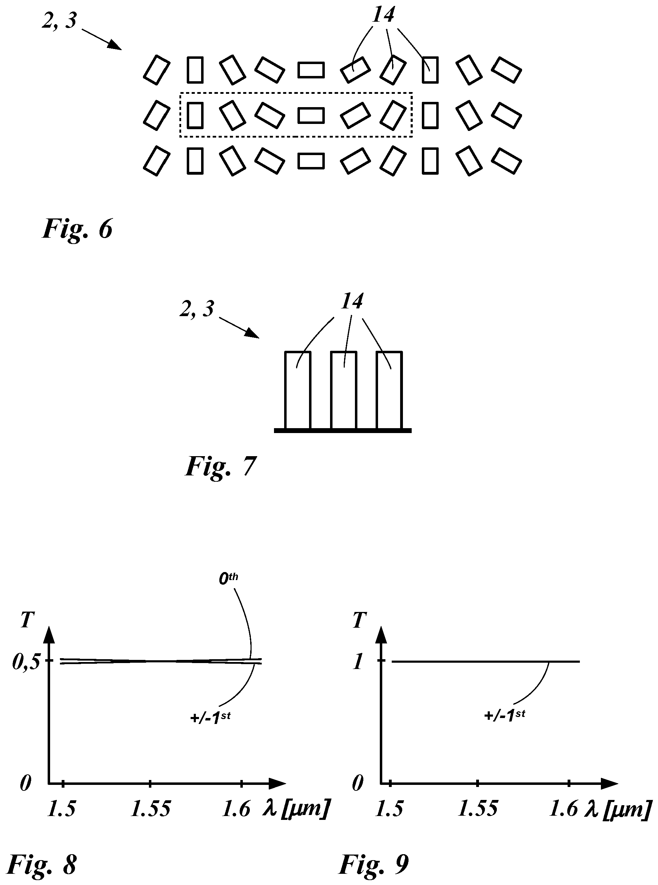

Fig. 6 and 7 show examples of the first and/or second dielectric metastructure grating 2, 3 in top view (Fig. 6) and in side view (Fig. 7). In this example the multiple cuboid dielectric nano-structures 14 consist of a dielectric material with high refractive index (e.g. silicon or titanium dioxide) and the multiple cuboid dielectric nano-structures 14 are arranged on a substrate with lower refractive index (e.g. glas). In this example the dielectric metastructure grating consists of a grid of multiple periods of six orientation varying dielectric nano-structures 14 each of which dielectric nano-structure 14 is rotated by 30° with respect to the previous one, as it can be seen in Fig. 6.

The Fig. 8 and 9 show wavelength dependent transmission of single photons. Fig. 8 shows that the first dielectric metastructure grating 2 acts over a wide wavelength range as a close to perfect 50/50 beam splitting element by a close to 50% transmission probability ($0^{th}$) and close to 50% diffraction probability ($\pm 1^{st}$) for the sum of both diffraction paths. In addition, Fig. 9 shows the diffraction probability of the second dielectric metastructure grating 3 for both diffraction paths together ($\pm 1^{st}$) with close to 100% over a wide wavelength range showing a polarization analysis in this range with a high contrast.

Reference signs:

| | |
|---|---|
| 1 | polarization analyses module |
| 2 | first dielectric metastructure grating |
| 3 | second dielectric metastructure grating |
| 4 | wave-plate |
| 5 | detector |
| 6 | polarization rotation element |
| 7 | single photon path |
| 8 | $0^{th}$ order diffraction path |
| 9 | +1st order diffraction path |
| 10 | -1st order diffraction path |
| 11 | single photon source |
| 12 | entangled photon source |
| 13 | quantum channel |
| 14 | nano-structure |

**Claims**

1. Polarization analysis module (1), preferably for quantum communication, quantum cryptography, and/or quantum key distribution (QKD), comprises a first and a second diffraction element, a wave-plate (4), and at least four single photon detectors (5), in order to enable a polarization analysis of single photons in two mutually unbiased bases and two orthogonal states per base,
   wherein the first and second diffraction elements are polarization sensitive first and second dielectric metastructure gratings (2, 3), and the wave-plate (4) is arranged between the first and second dielectric metastructure grating (2, 3), and at least two detectors (5) are arranged in diffraction paths of the first diffraction element, and at least two detectors (5) are arranged in diffraction paths of the second diffraction element.

2. Polarization analysis module (1) according to claim 1,

   wherein the first dielectric metastructure grating (2) is a polarization-insensitive beam splitting element and a polarization-sensitive diffraction element, and/or

the second dielectric metastructure grating (3) is a polarization-sensitive diffraction element.

3. Polarization analysis module (1) according to claim 1 or 2,
   wherein the wave-plate (4) between the first and the second dielectric metastructure grating (2, 3) is a quarter wave-plate (4).

4. Polarization analysis module (1) according to one of the claims 1 to 3,
   wherein a polarization rotator is arranged in front of the first dielectric metastructure grating (2), preferably the polarization rotator is a quarter-wave-plate, and/or a half-wave-plate, and/or a soleil Babinet compensator, or a combination of a first quarter wave-plate, a half wave-plate, and a second quarter-wave-plate.

5. Polarization analysis module (1) according to one of the claims 1 to 4,
   wherein the wave-plate (4) and the second dielectric metastructure grating (3) are arranged in the transmission path, preferably $0^{th}$ order diffraction path (8), of the first dielectric metastructure grating (2) behind the first dielectric metastructure grating (2).

6. Polarization analysis module (1) according to one of the claims 1 to 5,
   wherein the at least two detectors (5) are arranged in two selected diffraction paths of the first diffraction element, preferably two diffraction paths of orthogonal polarization.

7. Polarization analysis module (1) according to one of the claims 1 to 6,
   wherein the at least two detectors (5) behind the first and/or second dielectric metastructure grating (2, 3) are arranged in the $\pm 1^{st}$ order diffraction path (9, 10) of the first and/or second dielectric metastructure grating (2, 3), and/or a higher order diffraction path.

8. Polarization analysis module (1) according to one of the claims 1 to 7,
   wherein the first and/or second dielectric metastructure grating (2, 3) is a two-dimensional periodic metastructure of dielectric nano-structures (14).

9. Polarization analysis module (1) according to one of the claims 1 to 8,

   wherein the polarization analysis module (1) is arranged in a quantum cryptography system, preferably a quantum key distribution system, comprising a single photon source (11) and a receiver with one inventive polarization analysis module (1), whereby the receiver is connected with the single photon source (11) via a quantum channel (13), and whereby a single photon is generated in the source, transmitted via the quantum channel (13) to the receiver and measured in the at least one inventive polarization analysis module (1), or
   the inventive polarization analysis module (1) is arranged in a quantum cryptography system, preferably a quantum key distribution system, comprising a entangled photon source (12) and at least two receivers with one polarization analysis module (1) each, whereby each receiver is connected with the entangled photon source (12) via a quantum channel (13), and whereby polarization entangled photon pair with a signal photon and an idler photon is generated in the source, and one photon of each pair is transmitted via the quantum channel (13) to one receiver and measured in the at least one inventive polarization analysis module (1).

10. Method for polarization analysis of single photons, preferably for quantum communication, quantum cryptography, and/or quantum key distribution (QKD), is realized in a first base and a second base and two orthogonal states per base, whereby the first and the second bases are two mutually unbiased bases, whereby a first single photon possesses a polarization in one of the two orthogonal states of the first base and a second single photon possesses a polarization in one of the two orthogonal states of the second base,

    wherein a first dielectric metastructure grating (2) transmits or diffracts the first and/or second single photon randomly, and
    in order to detect the polarization of the first photon with certainty in one of the two orthogonal states of the first base, the first single photon is diffracted on the first dielectric metastructure grating (2) followed by a detection of the first single photon in a diffraction path of the first dielectric metastructure grating (2), and
    in order to detect the polarization of the second photon with certainty in one of the two orthogonal states of the second base, the second single photon is transmitted through the first dielectric metastructure grating (2) and through a wave-plate (4) and is diffracted on a second dielectric metastructure grating (3) followed by a detection of the second single photon in a diffraction path of the second dielectric metastructure grating (3).

**11.** Method according to claim 10,
wherein the diffraction by the polarization sensitive first and/or the second dielectric metastructure grating (2, 3) is an angle dependent polarization diffraction.

**12.** Method according to claim 10 or 11,
wherein the first dielectric metastructure grating (2) transmits the first and/or second single photon with 50% probability or diffracts the first and/or second single photon with 50% probability, and/or the second dielectric metastructure grating (3) diffracts the first and/or second single photon, preferably with 100%.

**13.** Method according to one of the claims 10 to 12,

wherein the first dielectric metastructure grating (2) performs the measurement of the first single photon in the first mutually unbiased base, preferably the first dielectric metastructure grating (2) enables the measurement of the single photon in the two orthogonal states of the fist mutually unbiased base, and/or
the wave-plate and the second dielectric metastructure grating (3) performs the measurement of the second single photon in the second mutually unbiased base, preferably the second dielectric metastructure grating (3) and the wave-plate (4) enables the measurement of the single photon in the two orthogonal states of the second mutually unbiased base.

**14.** Method according to one of the claims 10 to 13,
wherein a polarization rotator is arranged in front of the first dielectric metastructure grating (2), whereby the polarization rotator allows a rotation of the polarization states depending on its setting from any point to any point on the Poincaré-sphere.

**15.** Method according to one of the claims 10 to 14,
wherein the first and/or second dielectric metastructure grating (2, 3) split each diffraction path up by one or more additional degrees of freedom, preferably in each additional degree of freedom diffraction path a detector (5) is arranged, in order to detect the first and/or second single photon in a specific diffraction path and with a specific additional degree of freedom.

**Patentansprüche**

**1.** Polarisationsanalysemodul (1), vorzugsweise für Quantenkommunikation, Quantenkryptographie und/oder Quantenschlüsselverteilung (QKD), umfassend ein erstes und ein zweites Beugungselement, eine Wellenplatte (4) und mindestens vier Einzelphotonendetektoren (5), um eine Polarisationsanalyse von Einzelphotonen in zwei gegenseitig unbeeinflussten Basen und zwei orthogonalen Zuständen pro Basis zu ermöglichen,
wobei das erste und das zweite Beugungselement polarisationsempfindliche erste und zweite dielektrische Metastrukturgitter (2, 3) sind, und die Wellenplatte (4) zwischen dem ersten und dem zweiten dielektrischen Metastrukturgitter (2, 3) angeordnet ist, und mindestens zwei Detektoren (5) in Beugungspfaden des ersten Beugungselements angeordnet sind, und mindestens zwei Detektoren (5) in Beugungspfaden des zweiten Beugungselements angeordnet sind.

**2.** Polarisationsanalysemodul (1) nach Anspruch 1,
wobei das erste dielektrische Metastrukturgitter (2) ein polarisationsunempfindliches Strahlteilerelement und ein polarisationsempfindliches Beugungselement ist, und/oder das zweite dielektrische Metastrukturgitter (3) ein polarisationsempfindliches Beugungselement ist.

**3.** Polarisationsanalysemodul (1) nach Anspruch 1 oder 2,
wobei die Wellenplatte (4) zwischen dem ersten und dem zweiten dielektrischen Metastrukturgitter (2, 3) ein $\lambda/4$-Plättchen (4) ist.

**4.** Polarisationsanalysemodul (1) nach einem der Ansprüche 1 bis 3,
wobei ein Polarisationsdreher vor dem ersten dielektrischen Metastrukturgitter (2) angeordnet ist, vorzugsweise ist der Polarisationsdreher ein $\lambda/4$-Plättchen, und/oder ein $\lambda/2$-Plättchen, und/oder ein Soleil-Babinet-Kompensator, oder eine Kombination aus einem ersten $\lambda/4$-Plättchen, einem $\lambda/2$-Plättchen und einem zweiten $\lambda/4$-Plättchen.

**5.** Polarisationsanalysemodul (1) nach einem der Ansprüche 1 bis 4,

wobei die Wellenplatte (4) und das zweite dielektrische Metastrukturgitter (3) im Transmissionspfad, vorzugsweise im Beugungspfad (8) nullter Ordnung, des ersten dielektrischen Metastrukturgitters (2) hinter dem ersten dielektrischen Metastrukturgitter (2) angeordnet sind.

6. Polarisationsanalysemodul (1) nach einem der Ansprüche 1 bis 5,
wobei die mindestens zwei Detektoren (5) in zwei ausgewählten Beugungspfaden des ersten Beugungselements angeordnet sind, vorzugsweise in zwei Beugungspfaden mit orthogonaler Polarisation.

7. Polarisationsanalysemodul (1) nach einem der Ansprüche 1 bis 6,
wobei die mindestens zwei Detektoren (5) hinter dem ersten und/oder zweiten dielektrischen Metastrukturgitter (2, 3) im Beugungspfad $\pm 1$. Ordnung (9, 10) des ersten und/oder zweiten dielektrischen Metastrukturgitters (2, 3) und/oder in einem Beugungspfad höherer Ordnung angeordnet sind.

8. Polarisationsanalysemodul (1) nach einem der Ansprüche 1 bis 7,
wobei das erste und/oder zweite dielektrische Metastrukturgitter (2, 3) eine zweidimensionale periodische Metastruktur aus dielektrischen Nanostrukturen (14) ist.

9. Polarisationsanalysemodul (1) nach einem der Ansprüche 1 bis 8,

wobei das Polarisationsanalysemodul (1) in einem Quantenkryptographiesystem, vorzugsweise einem Quantenschlüsselverteilungssystem, angeordnet ist, das eine Einzelphotonenquelle (11) und einen Empfänger mit einem erfindungsgemäßen Polarisationsanalysemodul (1) umfasst, wobei der Empfänger mit der Einzelphotonenquelle (11) über einen Quantenkanal (13) verbunden ist, und wobei ein Einzelphoton in der Quelle erzeugt wird, über den Quantenkanal (13) zum Empfänger übertragen und in dem mindestens einen erfindungsgemäßen Polarisationsanalysemodul (1) gemessen wird, oder
das erfindungsgemäße Polarisationsanalysemodul (1) in einem Quantenkryptographiesystem, vorzugsweise einem Quantenschlüsselverteilungssystem, angeordnet ist, das eine verschränkte Photonenquelle (12) und mindestens zwei Empfänger mit je einem Polarisationsanalysemodul (1) umfasst, wobei jeder Empfänger über einen Quantenkanal (13) mit der verschränkten Photonenquelle (12) verbunden ist, und wobei in der Quelle ein polarisationsverschränktes Photonenpaar mit einem Signalphoton und einem Idlerphoton erzeugt wird, und ein Photon jedes Paares über den Quantenkanal (13) zu einem Empfänger übertragen und in dem mindestens einen erfindungsgemäßen Polarisationsanalysemodul (1) gemessen wird.

10. Verfahren zur Polarisationsanalyse von Einzelphotonen, vorzugsweise für die Quantenkommunikation, die Quantenkryptographie und/oder die Quantenschlüsselverteilung (QKD), realisiert in einer ersten und einer zweiten Basis und zwei orthogonalen Zuständen pro Basis, wobei die erste und die zweite Basis zwei gegenseitig unbeeinflusste Basen sind, wobei ein erstes Einzelphoton eine Polarisation in einem der beiden orthogonalen Zustände der ersten Basis besitzt und ein zweites Einzelphoton eine Polarisation in einem der beiden orthogonalen Zustände der zweiten Basis besitzt,

wobei ein erstes dielektrisches Metastrukturgitter (2) das erste und/oder zweite Einzelphoton zufällig durchlässt oder beugt, und
um die Polarisation des ersten Photons mit Sicherheit in einem der beiden orthogonalen Zustände der ersten Basis zu detektieren, wird das erste Einzelphoton an dem ersten dielektrischen Metastrukturgitter (2) gebeugt, gefolgt von einer Detektion des ersten Einzelphotons in einem Beugungspfad des ersten dielektrischen Metastrukturgitters (2), und
um die Polarisation des zweiten Photons mit Sicherheit in einem der beiden orthogonalen Zustände der zweiten Basis zu detektieren, wird das zweite Einzelphoton durch das erste dielektrische Metastrukturgitter (2) und durch eine Wellenplatte (4) übertragen und an einem zweiten dielektrischen Metastrukturgitter (3) gebeugt, gefolgt von einer Detektion des zweiten Einzelphotons in einem Beugungspfad des zweiten dielektrischen Metastrukturgitters (3).

11. Verfahren nach Anspruch 10,
wobei die Beugung durch das polarisationsempfindliche erste und/oder das zweite dielektrische Metastrukturgitter (2, 3) eine winkelabhängige Polarisationsbeugung ist.

12. Verfahren nach Anspruch 10 oder 11,
wobei das erste dielektrische Metastrukturgitter (2) das erste und/oder zweite Einzelphoton mit 50% Wahrscheinlichkeit durchlässt oder das erste und/oder zweite Einzelphoton mit 50% Wahrscheinlichkeit beugt, und/oder das zweite dielektrische Metastrukturgitter (3) das erste und/oder zweite Einzelphoton beugt, vorzugsweise mit 100%.

**13.** Verfahren nach einem der Ansprüche 10 bis 12,

wobei das erste dielektrische Metastrukturgitter (2) die Messung des ersten Einzelphotons in der ersten gegenseitig unbeeinflussten Basis durchführt, vorzugsweise das erste dielektrische Metastrukturgitter (2) die Messung des Einzelphotons in den beiden orthogonalen Zuständen der ersten gegenseitig unbeeinflussten Basis ermöglicht, und/oder
die Wellenplatte und das zweite dielektrische Metastrukturgitter (3) die Messung des zweiten Einzelphotons in der zweiten, gegenseitig unbeeinflussten Basis durchführt, vorzugsweise das zweite dielektrische Metastrukturgitter (3) und die Wellenplatte (4) die Messung des Einzelphotons in den beiden orthogonalen Zuständen der zweiten, gegenseitig unbeeinflussten Basis ermöglicht.

**14.** Verfahren nach einem der Ansprüche 10 bis 13,
wobei ein Polarisationsdreher vor dem ersten dielektrischen Metastrukturgitter (2) angeordnet ist, wobei der Polarisationsdreher je nach seiner Einstellung eine Drehung der Polarisationszustände von einem beliebigen Punkt zu einem beliebigen Punkt auf der Poincaré-Kugel ermöglicht.

**15.** Verfahren nach einem der Ansprüche 10 bis 14,
wobei das erste und/oder zweite dielektrische Metastrukturgitter (2, 3) jeden Beugungspfad um einen oder mehrere zusätzliche Freiheitsgrade aufteilt, vorzugsweise in jedem zusätzlichen Freiheitsgrad-Beugungspfad ein Detektor (5) angeordnet ist, um das erste und/oder zweite Einzelphoton in einem bestimmten Beugungspfad und mit einem bestimmten zusätzlichen Freiheitsgrad zu detektieren.

**Revendications**

**1.** Module d'analyse de la polarisation (1), de préférence pour la communication quantique, la cryptographie quantique et/ou la distribution quantique de clés (QKD), comprend un premier et un second élément de diffraction, une plaque d'onde (4) et au moins quatre détecteurs de photons individuels (5), afin de permettre une analyse de la polarisation des photons individuels dans deux bases mutuellement non biaisées et deux états orthogonaux par base,
dans lequel le premier et le second éléments de diffraction sont des réseaux de métastructure diélectrique (2, 3) sensibles à la polarisation, et la plaque d'onde (4) est disposée entre le premier et le second réseau de métastructure diélectrique (2, 3), et au moins deux détecteurs (5) sont disposés dans les chemins de diffraction du premier élément de diffraction, et au moins deux détecteurs (5) sont disposés dans les chemins de diffraction du second élément de diffraction.

**2.** Module d'analyse de la polarisation selon la revendication 1,

dans lequel le premier réseau de métastructure diélectrique (2) est un élément de division de faisceau insensible à la polarisation et un élément de diffraction sensible à la polarisation, et/ou
le second réseau de métastructure diélectrique (3) est un élément de diffraction sensible à la polarisation.

**3.** Module d'analyse de la polarisation selon la revendication 1 ou 2,
dans lequel la plaque d'onde (4) entre le premier et le second réseau de métastructures diélectriques (2, 3) est une plaque quart d'onde (4).

**4.** Module d'analyse de la polarisation selon l'une des revendications 1 à 3,
dans lequel un rotateur de polarisation est disposé devant le premier réseau diélectrique de métastructure (2), de préférence le rotateur de polarisation est une plaque quart d'onde, et/ou une plaque demi-onde, et/ou un compensateur soleil Babinet, ou une combinaison d'une première plaque quart d'onde, d'une plaque demi-onde, et d'une seconde plaque quart d'onde.

**5.** Module d'analyse de la polarisation selon l'une des revendications 1 à 4,
dans lequel la plaque d'onde (4) et le second réseau de métastructure diélectrique (3) sont disposés dans le chemin de transmission, de préférence le chemin de diffraction d'ordre zéro (8), du premier réseau de métastructure diélectrique (2) derrière le premier réseau de métastructure diélectrique (2).

**6.** Module d'analyse de la polarisation selon l'une des revendications 1 à 5,
dans lequel les au moins deux détecteurs (5) sont disposés sur deux chemins de diffraction sélectionnés du premier élément de diffraction, de préférence sur deux chemins de diffraction de polarisation orthogonale.

**7.** Module d'analyse de la polarisation selon l'une des revendications 1 à 6,
dans lequel les au moins deux détecteurs (5) situés derrière le premier et/ou le second réseau de métastructures diélectriques (2, 3) sont disposés dans le chemin de diffraction de $\pm$premier ordre (9, 10) du premier et/ou du second réseau de métastructures diélectriques (2, 3), et/ou dans un chemin de diffraction d'ordre supérieur.

**8.** Module d'analyse de la polarisation selon l'une des revendications 1 à 7,
dans lequel le premier et/ou le second réseau de métastructures diélectriques (2, 3) est une métastructure périodique bidimensionnelle de nanostructures diélectriques (14).

**9.** Module d'analyse de la polarisation selon l'une des revendications 1 à 8,

dans lequel le module d'analyse de polarisation (1) est placé dans un système de cryptographie quantique, de préférence un système de distribution quantique de clés, comprenant une source de photons individuels (11) et un récepteur avec un module inventif d'analyse de polarisation (1), le récepteur étant connecté à la source de photons individuels (11) via un canal quantique (13), et dans lequel un photon individuel est généré dans la source, est transmis via le canal quantique (13) au récepteur et est mesuré dans au moins un module inventif d'analyse de polarisation (1), ou
le module inventif d'analyse de polarisation (1) est placé dans un système de cryptographie quantique, de préférence un système de distribution de clés quantiques, comprenant une source de photons intriqués (12) et au moins deux récepteurs avec un module d'analyse de polarisation (1) chacun, chaque récepteur étant connecté à la source de photons intriqués (12) via un canal quantique (13), et dans lequel une paire de photons intriqués par polarisation avec un photon signal et un photon idler est générée dans la source, et un photon de chaque paire est transmis via le canal quantique (13) à un récepteur et mesuré dans au moins un module inventif d'analyse de la polarisation (1).

**10.** Procédé d'analyse de la polarisation des photons individuels, de préférence pour la communication quantique, la cryptographie quantique et/ou la distribution quantique de clés (QKD), est réalisée dans une première base et une seconde base et deux états orthogonaux par base, la première et la seconde base étant deux bases mutuellement non biaisées, dans lequel un premier photon individuel possède une polarisation dans l'un des deux états orthogonaux de la première base et un second photon individuel possède une polarisation dans l'un des deux états orthogonaux de la seconde base,

dans lequel un premier réseau de métastructure diélectrique (2) transmet ou diffracte le premier et/ou le second photon individuel de manière aléatoire, et afin de détecter avec certitude la polarisation du premier photon dans l'un des deux états orthogonaux de la première base, le premier photon individuel est diffracté sur le premier réseau de métastructures diélectriques (2), suivi d'une détection du premier photon individuel dans un chemin de diffraction du premier réseau de métastructures diélectriques (2), et
afin de détecter avec certitude la polarisation du second photon dans l'un des deux états orthogonaux de la seconde base, le second photon individuel est transmis à travers le premier réseau de métastructure diélectrique (2) et à travers une plaque d'onde (4) et est diffracté sur un second réseau de métastructure diélectrique (3), suivi d'une détection du second photon individuel dans un chemin de diffraction du second réseau de métastructure diélectrique (3).

**11.** Procédé selon la revendication 10,
dans lequel la diffraction par le premier et/ou le second réseau de métastructures diélectriques sensibles à la polarisation (2, 3) est une diffraction de polarisation dépendant de l'angle.

**12.** Procédé selon la revendication 10 ou 11,
dans lequel le premier réseau de métastructures diélectriques (2) transmet le premier et/ou le second photon individuel avec une probabilité de 50 % ou diffracte le premier et/ou le second photon individuel avec une probabilité de 50 %, et/ou le second réseau de métastructures diélectriques (3) diffracte le premier et/ou le second photon individuel, de préférence avec une probabilité de 100 %.

**13.** Procédé selon l'une des revendications 10 ou 12,

dans lequel le premier réseau de métastructures diélectriques (2) effectue la mesure du premier photon individuel dans la première base mutuellement non biaisée, de préférence le premier réseau de métastructures diélectriques (2) permet la mesure du photon individuel dans les deux états orthogonaux de la première base mutuellement non biaisée, et/ou

la plaque d'onde et le second réseau de métastructures diélectriques (3) permettent de mesurer le second photon individuel dans la seconde base mutuellement non biaisée, de préférence le second réseau de métastructures diélectriques (3) et la plaque d'onde (4) permettent de mesurer le photon individuel dans les deux états orthogonaux de la seconde base mutuellement non biaisée.

**14.** Procédé selon l'une des revendications 10 ou 13,
dans lequel un rotateur de polarisation est disposé devant le premier réseau diélectrique de métastructure (2), le rotateur de polarisation permettant une rotation des états de polarisation en fonction de son réglage de n'importe quel point à n'importe quel point de la sphère de Poincaré.

**15.** Procédé selon l'une des revendications 10 ou 14,
dans lequel le premier et/ou le second réseau de métastructures diélectriques (2, 3) divisent chaque chemin de diffraction par un ou plusieurs degrés de liberté supplémentaires, de préférence dans chaque chemin de diffraction à degré de liberté supplémentaire, un détecteur (5) est disposé, afin de détecter le premier et/ou le second photon individuel dans un chemin de diffraction spécifique et avec un degré de liberté supplémentaire spécifique.

*Fig. 1*

*Fig. 2*

**Fig. 3**

**Fig. 4**

**Fig. 5**

**Fig. 6**

**Fig. 7**

**Fig. 8**

**Fig. 9**

**EP 4 194 822 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005083525 A1